# EUROPEAN PATENT SPECIFICATION

(11) **EP 2 808 918 B1**
(45) Date of publication and mention of the grant of the patent: **12.09.2018**
(21) Application number: 14162757.0
(22) Date of filing: 31.03.2014
(51) Int. Cl.: H01M 2/06, H01M 2/30, H01M 10/0525, H01M 2/04

(54) **Rechargeable battery having an improved terminal structure**
Wiederaufladbare Batterie mit verbesserter Struktur der Batteriepole
Batterie rechargeable comprenant une structure améliorée de borne

(30) Priority: 28.05.2013 US 201361828029 P; 27.03.2014 US 201414227223
(43) Date of publication of application: 03.12.2014
(73) Proprietor: Samsung SDI Co., Ltd., Yongin-si, Gyeonggi-do (KR)
(72) Inventor: Song, Jang-Hyun, Gyeonggi-do (KR); Kim, Yong-Sam, Gyeonggi-do (KR)
(74) Representative: Taor, Simon Edward William

(56) References cited:
- US-A1- 2012 156 548
- US-A1- 2013 108 916

## Description

The described technology relates generally to a rechargeable battery, and more particularly, to a rechargeable battery having an improved terminal structure.

Rechargeable batteries are batteries that can be rechargeable and dischargeable, unlike primary batteries that cannot be rechargeable. Low-capacity rechargeable batteries are used for small portable electronic devices such as mobile phones, laptop computers, and camcorders, and large-capacity chargeable batteries are widely used as power supplies for driving motors for hybrid cars or the like.

Recently, high-output rechargeable batteries using a non-aqueous electrolyte with high energy density have been developed. The high-output rechargeable batteries are configured of large-capacity battery modules in which a plurality of rechargeable batteries are connected to each other in series so as to be used for driving motors for devices requiring large power, for example, electric cars, or the like.

In addition, one battery module is generally configured of a plurality of rechargeable batteries interconnected in series. The rechargeable battery can be configured of a cylindrical shape, a squared shape, or the like. The rechargeable battery has a negative electrode terminal and a positive electrode terminal protruding to the outside. The negative electrode terminal and positive electrode terminal are installed to be through a cap plate. A sealing member for sealing is installed between the terminals and the cap plate.

The sealing member is generally configured of a gasket in which column shaped terminals are inserted, thereby closely adhering to the terminal and a terminal hole. In order to install the sealing member as described above, an assembling process becomes complicated. In addition, in case a defect occurs in the sealing member a sealing performance between the terminals and the cap plate is deteriorated to leak an electrolyte and rainwater and the like are infiltrated therebetween to cause a short circuit.

US2013108916 discloses a rechargeable battery that includes an electrode assembly inside a case, a terminal post located entirely outside of, and protruding outwardly from, the case, a connection terminal having a portion that passes through the case, the connection terminal electrically coupling the electrode assembly and the terminal post; and a sealing member enveloping the portion of the connection terminal that passes through the case and electrically insulating the connection terminal from the case.
The above information disclosed in this background section is only for enhancement of understanding of the background of the described technology and therefore it may contain information that does not form the prior art that is already known in this country to a person of ordinary skill in the art.
The exemplary embodiments have been made to solve the above problem and to provide a rechargeable battery having advantages of an improved stability.
According to an aspect of the invention, there is provided a rechargeable battery as set out in claim 1. Preferred features of this aspect are set out in claims 2 to 12.
FIG. 1 is a perspective view showing a rechargeable battery according to a first exemplary embodiment.
FIG. 2 is a cross-sectional view taken along line II-II of FIG. 1.
FIG. 3 is a perspective view of a terminal according to the first exemplary embodiment.
FIG. 4 is exploded perspective view showing to cut-way a cap plate and a sealing member according to the first exemplary embodiment.
FIG. 5 is an enlarged cross-sectional view showing a portion of the rechargeable battery according to the first exemplary embodiment.
FIG. 6 is an enlarged cross-sectional view showing a portion of the rechargeable battery according to a second exemplary embodiment.
FIG. 7 is an enlarged cross-sectional view showing a portion of the rechargeable battery according to a third exemplary embodiment which is an embodiment of the present invention.

Hereinafter, exemplary embodiments will be described in detail with reference to the accompanying drawings so that they can be easily practiced by those skilled in the art to which the present invention pertains. However, the present disclosure may be implemented in various different types and is not limited to the embodiments provided in the present description. In addition, in the present description and the accompanying drawings, the same reference numerals denote the same components.

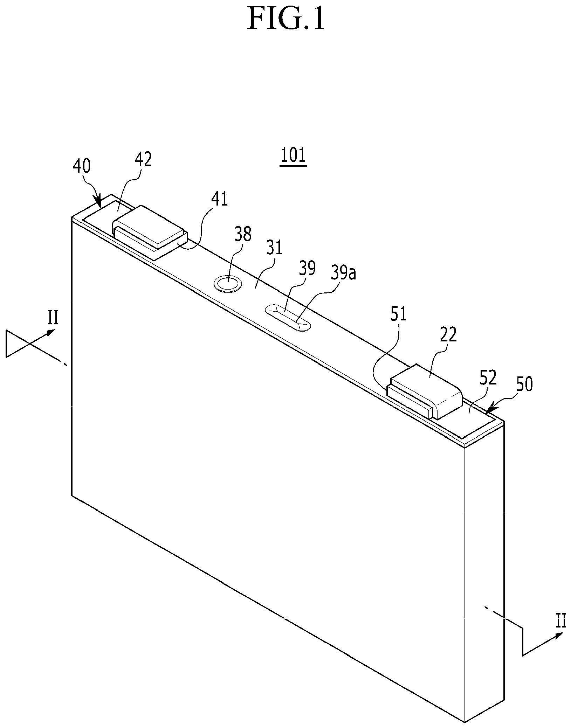

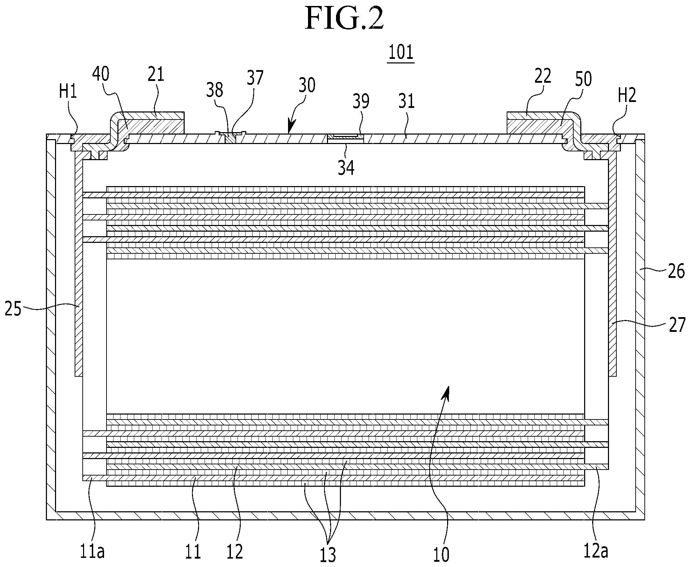

FIG. 1 is a perspective view showing a rechargeable battery according to a first exemplary embodiment and FIG. 2 is a cross-sectional view taken along line II-II in FIG. 1.
Describing with referring to FIGS. 1 and 2, a rechargeable battery 101 according to the first exemplary embodiment includes an electrode assembly 10 stacked by interposing a separator 13 between a positive electrode 11 and a negative electrode 12, a case 26 in which the electrode assembly 10 is installed, and a cap assembly 30 coupled with an opening of the case 26.

The rechargeable battery 101 according to the first exemplary embodiment is a lithium ion rechargeable battery. Herein, a square rechargeable battery will be described by way of example. However, the present disclosure
is not limited thereto and embodiments may be applied to battery having various shapes such as a lithium polymer battery, a cylindrical battery, or the like.
In this embodiment, the positive electrode 11 and the negative electrode 12 each include a coating part where an active material is coated on a surface of a current collector formed of a thin metal foil, and an uncoated part where the active material is not coated thereon.
The positive electrode uncoated part 11a is formed on the other side end of the positive electrode 11 in a length direction of the positive electrode 11 and the negative electrode uncoated part 12a is formed on one side end in a length direction of the negative electrode 12. Moreover, the positive electrode 11 and the negative electrode 12 are stacked after interposing a separator, which is an insulator, therebetween.

However, embodiments are not limited thereto. The above-mentioned electrode assembly 10 may be formed in a wound structure, having the separator between the positive electrode and the negative electrode formed of a plurality of sheets.
The case 26 is formed in an approximately rectangular parallelepiped shape and one surface thereof is provided with an opened opening. The cap assembly 30 includes a cap plate 31 covering the opening of the case 26, a first terminal 21 disposed on the cap plate 31 and electrically connected with the positive electrode 11, a second terminal 22 disposed on the cap plate 31 and electrically connected with the negative electrode 12, and a vent member 39 having a notch 39a formed therein so as to be fractured according to a set internal pressure. The vent member 39 is installed so as to cover the vent hole 34 formed in the cap plate 31.
The cap plate 31 is formed of a thin metal plate and has an electrolyte inlet 37 formed at one side thereof. Further, the cap plate 31 is provide with a sealing closure 38 fixedly installed to seal the electrolyte inlet 37
The first terminal 21 and the second terminal 22 are installed to pass through terminal holes Hi and H2 formed in the cap plate 31 and are electrically connected to the electrode assembly 10, respectively. That is, the first terminal 21 is installed to electrically connect with the positive electrode 11. The first terminal 21 is electrically connected with the positive electrode 11 via a current collector member 25. The first terminal 21 is provided with a sealing member 40 enclosing the first terminal 21.
The second terminal 22 is installed to electrically connect with the negative electrode 12. The second terminal 22 is electrically connected with the negative electrode 12 via the current collector member 27. The second terminal 22 is provided with the sealing member 50 enclosing a portion of the second terminal 22.

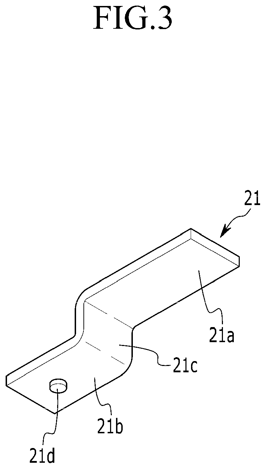

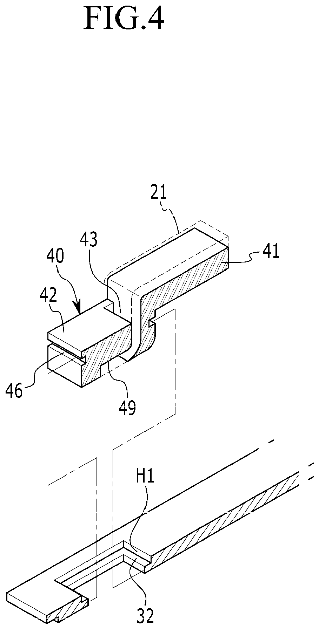

FIG. 3 is a perspective view of a terminal according to the first exemplary embodiment and FIG. 4 is exploded perspective view showing to cut-way a cap plate and a sealing member according to the first exemplary.

Describing with reference to FIGS. 3 and 4, a second terminal 22 and members coupled with the second terminal 22 are formed in a symmetrical structure with a first terminal 21 and members coupled with the first terminal 21, and thus a detailed description of the second terminal 22 will be substituted with the description for the first terminal 21 and members coupled with the first terminal 21.
In this embodiment, the first terminal 21 is formed of a plate-shaped and includes an upper connecting part (outer portion) 21a positioned on an outer side of the case 26, a current collector connecting part 21b (middle connection portion) inserted in the case 26 and coupled with the current collector member 25, and a middle connecting part 21c (current collection connecting portion) bended between the upper connecting part 21a and the current collector connecting part 21b.
In this embodiment, the upper connecting part 21a is disposed in parallel with the cap plate 31 over an upper portion of the cap plate 31. The upper connecting part 21a is formed toward a center of the cap plate 31 from the middle connecting part 21c.

The current collector connecting part 21b is disposed in parallel with the cap plate 31 under the cap plate 31. On the lower surface of the current collector connecting part 21b there is formed a current collector protrusion 21d that is fitted into the current collector member 25. In this embodiment, the current collector protrusion 21d is fixed to the current collector member 25 by welding. The current collector connecting part 21b is formed toward a side end of the cap plate 31 from the middle connecting part 21c. As described above, in this embodiment, the upper connecting part 21a and the current collector connecting part 21b are formed to extend in the opposite direction each other from the middle connecting part 21c.

The middle connecting part 21c is bended at an approximately perpendicular angle between the upper connecting part 21a and the current collector connecting part 21b to connect the upper connecting part 21a with the current collector connecting part 21b, and is inserted into a hole 43 formed in the sealing member 40. In addition, the middle connecting part 21c is inserted to be through the cap plate 31.

The upper connecting part 21a and the current collector connecting part 21b are disposed in parallel with the cap plate 31, and the middle connecting part 21c is vertically disposed to the upper connecting part 21a and the current collector connecting part 21b.

The sealing member 40 includes an upper sealing part 41 seated on the cap plate 31 and a lower sealing part 42 inserted into and fixed to a terminal hole H1 formed in the cap plate 31. The upper sealing part 41 is positioned between the lower surface of the upper connecting part 21a and the upper surface of the cap plate 31, and supports the upper connecting part 21a to be spaced apart from the cap plate 31. In addition, the upper sealing part 41 serves to insulate the cap plate 31 and the upper connecting part 21a from each other.

In the lower sealing part 42 is formed the hole 43 into which the middle connecting part 21c is inserted, and in the lower surface thereof is formed a seating groove 49 into which the current collector connecting part 21b is inserted along the hole 43.

On the terminal hole Hi is formed a protruding block part 32, and in the lower sealing part 42 is formed a supporting part 46 fitted into and coupled with the block part 32. The block part 32 is formed of a protrusion and is formed in the circumferential direction on an inner peripheral surface of the terminal hole Hi. The supporting part 46 is formed of a groove into which the block part 32 is inserted and is formed along the circumference of the lower sealing part 42.

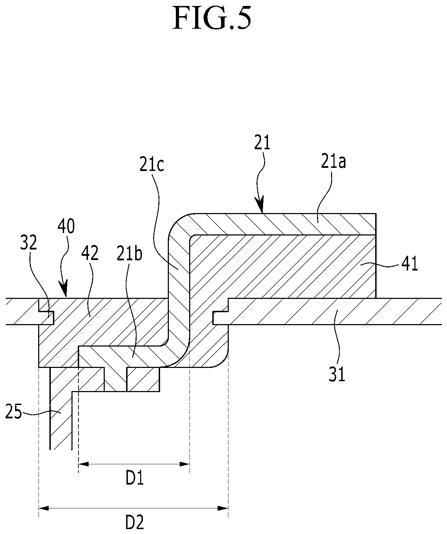

As set forth above, when the block part 32 and the supporting part 46 are formed, a contact area of the inside of the terminal hole H1 and the sealing member 40 is increased, thereby improving the sealing performance. In addition, when moisture is infiltrated into between the cap plate 31 and the sealing member 40, the block part 32 and the supporting part 46 can prevent the moisture from infiltrating.
The sealing member 40 is formed by an insert molding method in a state in which the first terminal 21 is installed on the cap plate 31. Therefore, the sealing member 40 is fixedly installed in the cap plate 31 simultaneously with being formed and can be stably fixed on the cap plate 31 enclosing the first terminal 21.
Similarly to the first terminal 21, the second terminal 22 includes an upper connecting part positioned over an upper portion of the cap plate 31, a current collector connecting part inserted into the case 26 and coupled with a current collector member 27, and a middle connecting part bended between the upper connecting part and the current collector connecting part. In addition, the second terminal 22 is provided with the sealing member 50 that is inserted into the terminal hole H2 to support the second terminal 22. The sealing member 50 is formed by the insert molding method in a state in which the second terminal is installed on the cap plate.
As shown in FIG. 5, a current collector connecting part 21b has a length D1 smaller than a length D2 of the terminal hole Hi. The terminal hole H1 has a longish rectangular cross section in one direction, and the current collector connecting part 21b is positioned under the terminal hole. The length D1 of the current collector connecting part 21b may be a 60% to 95% of the length D2 of the terminal hole H1.

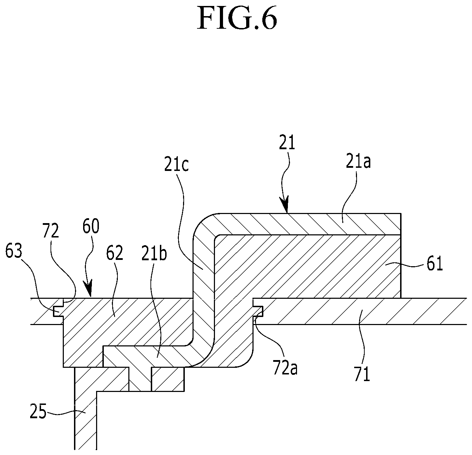

According to this embodiment, the current collector connecting part 21b has a length D1 smaller than the length D2 of the terminal hole H1, thereby making it possible to prevent of the current collector connecting part 21b and the cap plate 31 from being short-circuited. When the current collector connecting part 21b has a length longer than that of the terminal hole H1, since the current collector connecting part 21b is positioned under the cap plate 31, in case a foreign material such as water and the like is infiltrated into a gab between the sealing member 40 and the cap plate 31, thereby causing the short circuit between the current collector connecting part 21b and the cap plate 31 due to the foreign material. However, according to this embodiment, since the current collector connecting part 21b is positioned only under the terminal hole H1, it is possible to block basically that the water and the current collector connecting part 21b are contacted even if the water soaked.
In addition, the upper connecting part 21a has a length longer than that of the current collector connecting part 21b. The length of the upper connecting part 21a may have a length of 3 times to 1.2 times than that of the current collector connecting part 21b. Therefore, the center of gravity of the positive electrode terminal 21 is inclined toward the upper connecting part 21a and the upper connecting part 21a pressurizes the upper surface of the cap plate 31 to be stably fixed thereto.
Hence, in this embodiment, as a result of D1 being smaller than D2, the first terminal 21 is arranged such the portion of the first terminal 21 inside the case 26 does not overlap with the first surface of the case 26 when considered in a direction normal to the surface of the case 26 that comprises the terminal hole H1. Hence, short circuits between the portion of the first terminal 21 inside the case 26 (e.g. the current collector connecting portion 21b) and the cap plate 31 due to the foreign material can be reduced. It will be appreciated that, more generally, the battery may be considered to be within a housing with the terminal hole formed in a first surface of the housing. In such embodiments, it can be considered that the terminal is arranged such the portion of the terminal inside the housing does not overlap with the first surface of the housing when considered in a direction normal to the first surface of the housing.
It will be apprecaited that the terminal could comprise other shapes. For example, the terminal could comprise an outer portion located outside the housing and a connecting portion arranged to extend through the terminal hole. For example, the outer portion may be disposed in a plane parallel to the first surface, with the connecting portion extending through the terminal hole and connected directly to the current collector, for example by extending into a receiving hole formed in a surface of the current collector. FIG. FIG. 6 is an enlarged cross-sectional view showing a portion of the rechargeable battery according to a second exemplary embodiment.

The rechargeable battery according to the second exemplary has the same structure as those of the rechargeable battery according to the first embodiment except for a structure of a cap plate 71 and a sealing member 60 and therefore, the description of the same structure will be omitted.

The cap plate 71 according to this embodiment is provided with a terminal hole 72, and the terminal hole 72 has a first terminal 21 and a sealing member 60 insertedly installed therein.
The first terminal 21 includes an upper connecting part 21a positioned on an outer side of the case, a current collector connecting part 21b inserted in the case, and a middle connecting part 21c bended between the upper connecting part 21a and the current collector connecting part 21b.
The sealing member 60 includes an upper sealing part 61 seated on the cap plate 71 and a lower sealing part 62 inserted into and fixed to a terminal hole 72. The upper sealing part 61 is positioned between the lower surface of the upper connecting part 21a and the upper surface of the cap plate 71 and supports the upper connecting part 21a to be spaced apart from the cap plate 71. The sealing member 60 is formed by the insert molding method in a state in which the first terminal 21 is installed on the cap plate 71. Therefore, the sealing member 60 is fixedly installed into the cap plate 71 simultaneously with being formed and may be stably fixed on the cap plate 71 enclosing the first terminal 21.
In the terminal hole 72 is formed a block part 72a having a concave groove, and on the lower sealing part 62 is formed a supporting part 63 fitted into and coupled with the block part 72a. The block part 72a is formed in the circumferential direction in an inner peripheral surface of the terminal hole 72. The supporting part 63 is formed of a protrusion inserted into the block part 32 and is formed along circumference of the lower sealing part 62.
As set forth above, when the block part 72a of a groove shaped and the supporting part 73 of a protrusion shaped are formed, a contact area of the inside of the terminal hole 72 and the sealing member 60 is increased, thereby improving the sealing performance. In addition, when moisture is infiltrated into between the cap plate 71 and the sealing member 60, the block part 72a and the supporting part 63 can prevent the moisture from infiltrating.

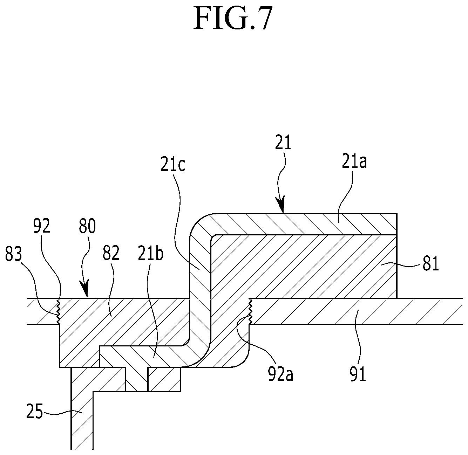

FIG. 7 is an enlarged cross-sectional view showing a portion of the rechargeable battery according to a third exemplary embodiment which is an embodiment of the present invention.

The rechargeable battery according to the third exemplary embodiment of the present invention has the same structure as those of the rechargeable battery according to the first embodiment of the present invention except for a structure of a cap plate 91 and a sealing member 80 and therefore, the description of the same structure will be omitted.

The cap plate 91 according to this embodiment of the present invention is provided with a terminal hole 92, and the terminal hole 92 has a first terminal 21 and a sealing member 80 insertedly installed therein.

The first terminal 21 includes an upper connecting part 21a positioned on an outer side of a case, a current collector connecting part 21b inserted in the case, and a middle connecting part 21c bended between the upper connecting part 21a and the current collector connecting part 21b.

The sealing member 80 includes an upper sealing part 81 seated on the cap plate 91 and a lower sealing part 82 inserted into and fixed to a terminal hole 92. The upper sealing part 81 is positioned between the lower surface of the upper connecting part 21a and the upper surface of the cap plate 91 and supports the upper connecting part 21a to be spaced apart from the cap plate 91.

The terminal hole 92 is provided with the block part 92a formed in a concave-convex shape in which a concave portion and a convex portion are alternately disposed, and the lower sealing part 82 is provided with the supporting part 83 fitted into and coupled with the block part 92a. The block part 92a is formed in the circumferential direction in an inner peripheral surface of the terminal hole 92. The supporting part 83 is formed in a concave-convex shape in which the convex portion and the concave portion inserted into the concave portion and the convex portion of the block part 92a are alternately disposed to each other, and is formed along a circumference of the lower sealing part 82.

As describe above, when the block part 92a having the concave-convex shape and the supporting part 83 having the concave-convex shape fitted into and coupled with the block part 92a are formed, a contact area of the inside of the terminal hole 92 and the sealing member 40 is increased, thereby improving the sealing performance. In addition, when moisture is infiltrated into between the cap plate 91 and the sealing member 80, the block part 92a and the supporting part 83 can prevent the moisture from infiltrating.
As discused above, embodiments of the present invention provide a rechargeable battery, comprising: a housing comprising a terminal hole in a first surface of the housing; an electrode assembly housed inside the housing; a current collector electrically connected to the electrode assembly; a terminal arranged to extend from inside the housing to outside the housing through the terminal hole, wherein the terminal comprises a portion inside the housing that is electrically connected to the current collector and a portion that is outside of the housing; a sealing member formed around a portion of the terminal so as to seal the terminal hole; wherein the terminal is arranged such the portion of the terminal inside the housing does not overlap with the first surface of the housing when considered in a direction normal to the first surface. The housing comprises a first seal part arranged on an inner surface of the housing that defines the terminal hole, and the sealing member comprises a second seal part for engagement with the first seal part. In some such embodiments, the first seal part may comprise a protrusion and the second seal part may comprise a groove or the first seal part may comprise a groove and the second seal part may comprise a protrusion. The first seal part comprises a series of alternately disposed concave and convex portions along an inner surface of the housing that defines the terminal hole and the second seal part comprises a corresponding series of alternately disposed concave and convex portions for engagement with the first seal part.
In some embodiments, the housing comprises a case and a cap plate which is coupled with the case, with the terminal hole being formed in the cap plate.
In some embodiments, the terminal comprises: a current collector connecting portion inside the housing that is electrically connected to the current collector, a middle connecting portion arranged to extend through the terminal hole and an outer portion located outside the housing. In such embodiments, the connecting portion can be arranged to connect the current collector connecting portion to the outer portion. In some such embodiments, the middle connecting portion and the current collector connecting portion can be provided by the same portion of the terminal.

In some embodiments, the current collector connecting portion, middle connecting portion and the outer portion are arranged to form a step shape. In some such embodiments, the outer portion may be arranged to extend in a direction towards a central region of the first surface.

In some embodiments, the sealing member comprises a first sealing part arranged between the outer portion of the terminal and the first surface of the housing and between a first surface of the middle connecting portion and a first portion of an inner surface of the housing that defines the terminal hole, and a second sealing part arranged between a second surface of the middle connecting portion and a second portion of the inner surface of the housing that defines the terminal hole. In some embodiments, the second sealing part comprises a groove for receiving the current collector connecting portion.

In some embodiments, the outer portion and the current collector connecting portion are respectively disposed in a first plane and a second plane. In some such embodiments, the first and second planes are planes parallel to the first surface.

In some embodiments, the length of the current collector connecting portion is smaller than the diameter of the terminal hole. The length of the current collector connecting portion of the terminal may be 60% to 95% of the diameter of the terminal hole. The length of the outer portion may be greater than the length of the current collector connecting portion. In particular, in some embodiments, the length of the outer portion may be from 1.2 to 3 times greater than the length of the current collector connecting portion.

In some embodiments, the current collector connecting portion comprises a first engagement part and the current collector comprises a second engagement part for engagement with the first engagement part. The first engagement part may comprise a current collector connecting protrusion formed on a surface of the current collector connecting portion, and the second engagement part may comprise a groove or hole in a portion of the current collector for receiving the current collector connecting protrusion.

In some embodiments, the sealing member may be formed by an insert molding method.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery (101), comprising:
a housing comprising a terminal hole (H1, H2) in a first surface of the housing;
an electrode assembly (10) housed inside the housing;
a current collector (25, 27) electrically connected to the electrode assembly (10);
a terminal (21, 22) arranged to extend from inside the housing to outside the housing through the terminal hole (H1, H2), wherein the terminal comprises a portion inside the housing that is electrically connected to the current collector (25, 27) and a portion that is outside of the housing;
a sealing member (80) formed around a portion of the terminal (21, 22) so as to seal the terminal hole (H1, H2);
wherein the terminal (21, 22) is arranged such the portion of the terminal (21, 22) inside the housing does not overlap with the first surface of the housing when considered in a direction normal to the first surface;
wherein the housing comprises a first seal part (92a) arranged on an inner surface of the housing that defines the terminal hole (H1, H2); and
the sealing member (80) comprises a second seal part (83) for engagement with the first seal part (92a).
wherein: the first seal part (92a) comprises a series of alternately disposed concave and convex portions along an inner surface of the housing that defines the terminal hole (H1, H2); and
the second seal part (83) comprises a corresponding series of alternately disposed concave and convex portions for engagement with the first seal part (92a).

2. The rechargeable battery (101) according to claim 1, wherein the housing comprises a case (26) and a cap plate (91) which is coupled with the case (26), wherein the terminal hole (H1, H2) is formed in the cap plate.

3. The rechargeable battery (101) according to claim 1 or 2, wherein the terminal (21, 22) comprises:
a current collector connecting portion (21b) inside the housing that is electrically connected to the current collector (25, 27);
a middle connecting portion (21c) arranged to extend through the terminal hole (H1, H2); and
an outer portion (21a) located outside the housing, wherein the connecting portion (21c) is arranged to connect the current collector connecting portion (21b) to the outer portion (21a).

4. The rechargeable battery (101) according to claim 3, wherein the current collector connecting portion (21b), middle connecting portion (21c) and the outer portion (21a) are arranged to form a step shape; optionally wherein the outer portion (21a) is arranged to extend in a direction towards a central region of the first surface.

5. The rechargeable battery (101) according to claim 4, wherein the sealing member (80) comprises:
a first sealing part (81) arranged between the outer portion (21a) of the terminal and the first surface of the housing and between a first surface of the middle connecting portion (21c) and a first portion of an inner surface of the housing that defines the terminal hole (H1, H2); and
a second sealing part (82) arranged between a second surface of the middle connecting portion (21c) and a second portion of the inner surface of the housing that defines the terminal hole (H1, H2).

6. The rechargeable battery (101) according to any one of claim 3 to 5, wherein the outer portion (21a) and the current collector connecting portion (21b) are respectively disposed in a first plane and a second plane, optionally wherein the first and second planes are planes parallel to the first surface.

7. The rechargeable battery (101) according to any one of claims 3 to 6, wherein a length (Di) of the current collector connecting portion (21b) is smaller than a diameter (D2) of the terminal hole (H1, H2).

8. The rechargeable battery (101) according to claim 7, wherein the length (Di) of the current collector connecting portion (21b) of the terminal is 60% to 95% of the diameter of the terminal hole (H1, H2).

9. The rechargeable battery (101) according to according to claim 7 or 8, wherein a length of the outer portion (21a) is greater than the length (D1) of the current collector connecting portion (21b); optionally wherein the length of the outer portion (21a) is from 1.2 to 3 times greater than the length (D1) of the current collector connecting portion (21b).

10. The rechargeable battery (101) according to any one of claims 3 to 9, wherein the current collector connecting portion (21b) comprises a first engagement part and the current collector (25, 27) comprises a second engagement part for engagement with the first engagement part.

11. The rechargeable battery (101) according to claim 10, wherein the first engagement part comprises a current collector connecting protrusion (21d) formed on a surface of the current collector connecting portion (21b), and the second engagement part comprises a groove or hole in a portion of the current collector (25, 27) for receiving the current collector connecting protrusion (21d).

12. The rechargeable battery (101) according to any one of claims 1 to 11, wherein the sealing member (80) is formed by an insert molding method.

## Patentansprüche

1. Wiederaufladbare Batterie (101), umfassend:
ein Gehäuse, das eine Polöffnung (H1, H2) in einer ersten Fläche des Gehäuses umfasst;
eine innerhalb des Gehäuses aufgenommene Elektrodenanordnung (10);
einen mit der Elektrodenanordnung (10) elektrisch verbundenen Stromkollektor (25, 27);
einen Pol (21, 22), der so angeordnet ist, dass er sich von innerhalb des Gehäuses durch die Polöffnung (H1, H2) nach außerhalb des Gehäuses erstreckt, wobei der Pol einen mit dem Stromkollektor (25, 27) elektrisch verbundenen Abschnitt innerhalb des Gehäuses und einen Abschnitt außerhalb des Gehäuses umfasst;
ein Dichtungselement (80), das um einen Abschnitt des Pols (21, 22) ausgebildet ist, um die Polöffnung (H1, H2) abzudichten;
wobei der Pol (21, 22) so angeordnet ist, dass der Abschnitt des Pols (21, 22) innerhalb des Gehäuses, betrachtet in einer zur ersten Fläche normalen Richtung, die erste Fläche des Gehäuses nicht überlappt;
wobei das Gehäuse ein erstes Dichtungsteil (92a) umfasst, das auf einer Innenfläche des Gehäuses, welche die Polöffnung (H1, H2) definiert, angeordnet ist; und
das Dichtungselement (80) ein zweites Dichtungsteil (83) zum Eingriff mit dem ersten Dichtungsteil (92a) umfasst,
wobei: das erste Dichtungsteil (92a) eine Reihe von abwechselnd angeordneten konkaven und konvexen Abschnitten entlang einer Innenfläche des Gehäuses, welche die Polöffnung (H1, H2) definiert, umfasst und
das zweite Dichtungsteil (83) eine entsprechende Reihe von abwechselnd angeordneten konkaven und konvexen Abschnitten zum Eingriff mit dem ersten Dichtungsteil (92a) umfasst.

2. Wiederaufladbare Batterie (101) nach Anspruch 1, wobei das Gehäuse einen Kasten (26) und eine mit dem Kasten (26) gekoppelte Deckplatte (91), wobei die Polöffnung (H1, H2) in der Deckplatte ausgebildet ist.

3. Wiederaufladbare Batterie (101) nach Anspruch 1 oder 2, wobei der Pol (21, 22) Folgendes umfasst:
einen mit dem Stromkollektor (25, 27) elektrisch verbundenen Stromkollektorverbindungsabschnitt (21b) innerhalb des Gehäuses;
einen Mittelverbindungsabschnitt (21c), der so angeordnet ist, dass er sich durch die Polöffnung (H1, H2) erstreckt; und
einen äußeren Abschnitt (21a), der sich außerhalb des Gehäuses befindet, wobei der Verbindungsabschnitt (21c) angeordnet ist, um den Stromkollektorverbindungsabschnitt (21b) mit dem äußeren Abschnitt (21a) zu verbinden.

4. Wiederaufladbare Batterie (101) nach Anspruch 3, wobei der Stromkollektorverbindungsabschnitt (21b), der Mittelverbindungsabschnitt (21c) und der äußere Abschnitt (21a) so angeordnet sind, dass sie eine Stufenform ausbilden; wobei optional der äußere Abschnitt (21a) so angeordnet ist, dass er sich in einer Richtung zu einem zentralen Bereich der ersten Fläche erstreckt.

5. Wiederaufladbare Batterie (101) nach Anspruch 4, wobei das Dichtungselement (80) Folgendes umfasst:
ein erstes Dichtungsteil (81), das zwischen dem äußeren Abschnitt (21a) des Pols und der ersten Fläche des Gehäuses und zwischen einer ersten Fläche des Mittelverbindungsabschnitts (21c) und einem ersten Abschnitt einer Innenfläche des Gehäuses, welche die Polöffnung (H1, H2) definiert, angeordnet ist; und
ein zweites Dichtungsteil (82), das zwischen einer zweiten Fläche des Mittelverbindungsabschnitts (21c) und einem zweiten Abschnitt der Innenfläche des Gehäuses, welche die Polöffnung (H1, H2) definiert, angeordnet ist.

6. Wiederaufladbare Batterie (101) nach einem der Ansprüche 3 bis 5, wobei der äußere Abschnitt (21a) und der Stromkollektorverbindungsabschnitt (21b) in einer ersten Ebene bzw. in einer zweiten Ebene angeordnet sind, wobei optional die erste und die zweite Ebene zur ersten Fläche parallele Ebenen sind.

7. Wiederaufladbare Batterie (101) nach einem der Ansprüche 3 bis 6, wobei eine Länge (D1) des Stromkollektorverbindungsabschnitts (21b) kleiner als ein Durchmesser (D2) der Polöffnung (H1, H2) ist.

8. Wiederaufladbare Batterie (101) nach Anspruch 7, wobei die Länge (D1) des Stromkollektorverbindungsabschnitts (21b) des Pols 60 % bis 95 % des Durchmessers der Polöffnung (H1, H2) ist.

9. Wiederaufladbare Batterie (101) nach Anspruch 7 oder 8, wobei eine Länge des äußeren Abschnitts (21a) größer als die Länge (D1) des Stromkollektorverbindungsabschnitts (21b) ist; wobei optional die Länge des äußeren Abschnitts (21a) 1,2 bis 3 Mal größer als die Länge (D1) des Stromkollektorverbindungsabschnitts (21b) ist.

10. Wiederaufladbare Batterie (101) nach einem der Ansprüche 3 bis 9, wobei der Stromkollektorverbindungsabschnitt (21b) ein erstes Eingriffsteil umfasst und der Stromkollektor (25, 27) ein zweites Eingriffsteil zum Eingriff mit dem ersten Eingriffsteil umfasst.

11. Wiederaufladbare Batterie (101) nach Anspruch 10, wobei das erste Eingriffsteil einen Stromkollektorverbindungsvorsprung (21d) umfasst, der auf einer Fläche des Stromkollektorverbindungsabschnitts (21b) ausgebildet ist, und der zweite Eingriffsteil eine Nut oder ein Loch in einem Abschnitt des Stromkollektors (25, 27) zum Aufnehmen des Stromkollektorverbindungsvorsprungs (21d) umfasst.

12. Wiederaufladbare Batterie (101) nach einem der Ansprüche 1 bis 11, wobei das Dichtungselement (80) durch ein Einsatzformverfahren ausgebildet ist.

## Revendications

1. Batterie rechargeable (101), comprenant :
un boîtier comprenant un trou de borne (H1, H2) dans une première surface du boîtier ;
un ensemble d'électrodes (10) renfermé à l'intérieur du boîtier ;
un collecteur de courant (25, 27) électriquement connecté à l'ensemble d'électrodes (10) ;
une borne (21, 22) agencée de façon à s'étendre de l'intérieur du boîtier à l'extérieur du boîtier à travers le trou de borne (H1, H2), la borne comprenant une partie à l'intérieur du boîtier qui est électriquement connectée au collecteur de courant (25, 27) et une partie qui se trouve à l'extérieur du boîtier ;
un élément de scellement étanche (80) formé autour d'une partie de la borne (21, 22) de façon à sceller de manière étanche le trou de borne (H1, H2) ;
dans laquelle la borne (21, 22) est agencée de telle sorte que la partie de la borne (21, 22) à l'intérieur du boîtier ne chevauche pas la première surface du boîtier, considérée dans une direction normale à la première surface ;
dans laquelle le boîtier comprend une première partie de scellement étanche (92a) disposée sur une surface intérieure du boîtier qui définit le trou de borne (H1, H2) ; et
l'élément de scellement étanche (80) comprenant une deuxième partie de scellement étanche (83) pour venir en prise avec la première partie de scellement étanche (92a) ;
dans laquelle : la première partie de scellement étanche (92a) comprend une série de parties concaves et convexes disposées en alternance le long d'une surface intérieure du boîtier qui définit le trou de borne (H1, H2) ; et
la deuxième partie de scellement étanche (83) comprend une série correspondante de parties concaves et convexes disposées en alternance pour venir en prise avec la première partie de scellement étanche (92a).

2. Batterie rechargeable (101) selon la revendication 1, dans laquelle le boîtier comprend une enceinte (26) et une plaque de capuchon (91) qui est couplée à l'enceinte (26), dans laquelle le trou de borne (H1, H2) est formé dans la plaque de capuchon.

3. Batterie rechargeable (101) selon la revendication 1 ou 2, dans laquelle la borne (21, 22) comprend :
une partie de connexion de collecteur de courant (21b) à l'intérieur du boîtier, qui est électriquement connectée au collecteur de courant (25, 27) ;
une partie de connexion médiane (21c) agencée de façon à s'étendre à travers le trou de borne (H1, H2) ; et
une partie extérieure (21a) disposée à l'extérieur du boîtier, la partie de connexion (21c) étant agencée de façon à connecter la partie de connexion de collecteur de courant (21b) à la partie extérieure (21a).

4. Batterie rechargeable (101) selon la revendication 3, dans laquelle la partie de connexion de collecteur de courant (21b), la partie de connexion médiane (21c) et la partie extérieure (21a) sont agencées de façon à former une forme d'épaulement ; et, de façon optionnelle, dans laquelle la partie extérieure (21a) est agencée de façon à s'étendre dans une direction vers une région centrale de la première surface.

5. Batterie rechargeable (101) selon la revendication 4, dans laquelle l'élément de scellement étanche (80) comprend :
une première partie de scellement étanche (81) disposée entre la partie extérieure (21a) de la borne et la première surface du boîtier et entre une première surface de la partie de connexion médiane (21c) et une première partie d'une surface intérieure du boîtier qui définit le trou de borne (H1, H2) ; et
une deuxième partie de scellement étanche (82) disposée entre une deuxième surface de la partie de connexion médiane (21c) et une deuxième partie de la surface intérieure du boîtier qui définit le trou de borne (H1, H2).

6. Batterie rechargeable (101) selon l'une quelconque des revendications 3 à 5, dans laquelle la partie extérieure (21a) et la partie de connexion de collecteur de courant (21b) sont respectivement disposées dans un premier plan et un deuxième plan, et, de façon optionnelle, dans laquelle les premier et deuxième plans sont des plans parallèles à la première surface.

7. Batterie rechargeable (101) selon l'une quelconque des revendications 3 à 6, dans laquelle une longueur (Di) de la partie de connexion de collecteur de courant (21b) est inférieure à un diamètre (D2) du trou de borne (H1, H2) .

8. Batterie rechargeable (101) selon la revendication 7, dans laquelle la longueur (D1) de la partie de connexion de collecteur de courant (21b) est de 60% à 95% du diamètre du trou de borne (H1, H2) .

9. Batterie rechargeable (101) selon la revendication 7 ou 8, dans laquelle une longueur de la partie extérieure (21a) est supérieure à la longueur (D1) de la partie de connexion de collecteur de courant (21b) ; et, de façon optionnelle, dans laquelle la longueur de la partie extérieure (21a) est de 1,2 à 3 fois supérieure à la longueur (D1) de la partie de connexion de collecteur de courant (21b).

10. Batterie rechargeable (101) selon l'une quelconque des revendications 3 à 9, dans laquelle la partie de connexion de collecteur de courant (21b) comprend une première partie de prise et le collecteur de courant (25, 27) comprend une deuxième partie de prise pour venir en prise avec la première partie de prise.

11. Batterie rechargeable (101) selon la revendication 10, dans laquelle la première partie de prise comprend une saillie de connexion de collecteur de courant (21d) formée sur une surface de la partie de connexion de collecteur de courant (21b), et la deuxième partie de prise comprend une rainure ou un trou dans une partie du collecteur de courant (25, 27) pour recevoir la saillie de connexion de collecteur de courant (21d).

12. Batterie rechargeable (101) selon l'une quelconque des revendications 1 à 11, dans laquelle l'élément de scellement étanche (80) est formé par un procédé de surmoulage.
